# EUROPÄISCHE PATENTSCHRIFT

(11) **EP 1 216 176 B1**
(45) Veröffentlichungstag und Bekanntmachung des Hinweises auf die Patenterteilung: **19.07.2006**
(21) Anmeldenummer: 00966010.1
(22) Anmeldetag: 14.09.2000
(51) Int. Cl.: B60T 8/00, G01D 3/02, G01B 7/16

(54) **VORRICHTUNG MIT MINDESTENS ZWEI SENSOREN, INSBESONDERE REIFEN-SEITENWANDTORSIONS(SWT)-SENSOREN**
DEVICE COMPRISING AT LEAST TWO SENSORS, ESPECIALLY TIRE SIDEWALL TORSION (SWT) SENSORS
DISPOSITIF COMPORTANT AU MOINS DEUX CAPTEURS, EN PARTICULIER DES CAPTEURS DE TORSION DE FLANC DE PNEU

(30) Priorität: 15.09.1999 DE 19944094; 14.01.2000 DE 10001543; 07.09.2000 DE 10044288
(43) Veröffentlichungstag der Anmeldung: 26.06.2002
(73) Patentinhaber: Continental Teves AG & Co. oHG, 60488 Frankfurt am Main (DE)
(72) Erfinder: FEY, Wolfgang, D-65527 Niedernhausen (DE); HEINZ, Micha, D-64293 Darmstadt (DE); CHEN, Ling, 64285 Darmstadt (DE)
(86) Internationale Anmeldenummer: PCT/EP2000/008990
(87) Internationale Veröffentlichungsnummer: WO 2001/019655

(56) Entgegenhaltungen:
- EP-A- 0 626 562
- DE-A- 3 543 058
- DE-A- 4 409 708
- DE-A- 4 434 180
- DE-A- 4 435 160
- DE-A- 19 602 243

## Beschreibung

Die Erfindung betrifft eine Vorrichtung mit mindestens zwei Sensoren, insbesondere Reifen-Seitenwandtorsions(SWT)-Sensoren, für ein Kfz-Regelungssystem, die in unterschiedlichem Abstand zur Reifenrotationsachse stationär am Chassis bzw. der Radaufhängung angebracht und die mit mindestens einem auf oder in der Reifenwandung angebrachten oder mit mindestens einem auf oder in der Reifenwandung angebrachten und einem herkömmlichen, Pole aufweisenden Encoder zusammenwirken, wobei die Ausgangssignale oder Ausgangsinformationen der Sensoren nach einer Auswertung dem Kfz-Regelungssystem zugeführt werden.

Es ist eine Vielzahl von Verfahren zur Regelung des Fahrverhaltens eines Fahrzeugs bekannt, die Reifensensoren zur Erfassung der an den Reifen angreifenden Kräfte und Momente verwenden. Reifensensoren (SWT-Sensor) bestehen aus einem im oder am Reifen angebrachten Encoder und mindestens einem dem Encoder zugeordneten, stationär an der Radaufhängung angeordneten Sensor (Meßwertaufnehmer). Während in der EP 04 441 09 B1 die Deformation des Reifenprofilbereichs des Reifens - der Reifenlatsch - überwacht wird, wird in der WO 96/10505 die Deformation der Seitenwand - die Torsionsdeformationen - eines Reifens über eine Zeitspannenmessung zwischen dem Passieren mindestens zweier auf unterschiedlichem Radius zur Rotationsachse angeordneter Marken am rotierenden Rad erfaßt. Ein Reifensensor , der bei einer Verformung des Reifens infolge der an dem Reifen angreifenden Kräfte eine Änderung der Phasenlage und/oder der Amplitude zwischen von Meßwertaufnehmern abgegebenen Ausgangssignalen erfaßt, ist in der WO 97/44673 beschrieben. Die DE-A-4 409 708 offenbart eine Schaltungsanordnung zur Aufbereitung und nachfolgenden Verarbeitung in einem ABS-Regelungssystem. Dabei soll die Störsicherheit bei der Erfassung der analogen Signale erhöht werden und der Schaltungsaufwand verringert werden. Dies soll erreicht werden, indem ein aufzubereitendes Signal mit einem nachgeführten Signal verglichen und die ermittelte Signaländerung als binäres Signal ausgegeben wird. Das binäre Signal wird dann in einer digitalen Signalverarbeitung weiterbehandelt, bevor es dem Kfz-Regelungssystem zugeführt wird.

Der Erfindung liegt die Aufgabe zugrunde eine Vorrichtung zu schaffen, die es ermöglicht, der Signalverarbeitung bereits vorverarbeitete bzw. aufbereitete Datensätze bereitzustellen, damit die Signalverarbeitungs Software die Fehlerkorrektur der Rohdaten und die Ermittlung der Reifen- bzw. Radkräfte aus den aufbereiteten Signaldaten mit verringertem Rechenaufwand ausführen kann. Die Signalverarbeitung kann dem Kfz.-Regelungssystem vorgeschaltet oder Bestandteil des Kfz.-Regelungssystems sein.

Diese Aufgabe wird bei einer gattungsgemäßen Vorrichtung dadurch gelöst, daß zwischen dem Kfz- Regelungssystem und den Sensoren mindestens eine analoge und eine digitale Signalaufbereitung und/oder -verarbeitung vorgesehen ist.

Nach einem vorteilhaften Ausführungsbeispiel stellen die Sensoren mindestens zwei, bzgl. einer Änderung der Phasenlage und mindestens ein, bzgl. der Änderung der Amplitude bewertbare Ausgangssignale als im wesentlichen sinusförmige Wechselstromsignale der analogen Signalaufbereitung und/oder - verarbeitung zur Verfügung.

Zum Ermitteln der Amplitude ist der analogen Signalaufbereitung und/oder -verarbeitung mindestens ein Analog-Digitalwandler zugeordnet.

Die erfindungsgemäße Vorrichtung weist darüber hinaus vorteilhaft folgende Baugruppen auf:
eine analoge Signalaufbereitung mit einem Wandler, der das sinusförmige Wechselstromsignal in eine Spannung überführt,
einen Filter, der Signalstörungen unterdrückt
eine Offsetkompensationseinheit, die die Signalaufbereitung und/oder -verarbeitung an Veränderungen des Signaloffsets des Sensors anpaßt,
eine Triggerschaltung, die das sinusförmige (Analog)Signal in ein Rechtecksignal wandelt und
eine Amplitudenermittlung, die den Spitzenwert jeder Halbwelle erfasst. Die Amplitudenermittlung ist vorteilhaft gekennzeichnet durch
einen Trennverstärker, der die positive und negative Halbwelle getrennt verstärkt
einen Invertierer, der die negative Halbwelle umkehrt
einen von dem am Ausgang der Triggerschaltung anstehenden Signal getriggerten Schalter, der phasenrichtig die positive oder negative Halbwelle auf den Eingang eines Amplitudenwertdetektors schaltet
ein Register, das den Wert der Amplitude festhält und
einer von der digitalen Signalaufbereitung und/oder - verarbeitung kontrollierten Schaltung zum Löschen des Registers.
Nach einer erfindungsgemäßen Weiterbildung der Vorrichtung weist die digitale Signalaufbereitung mindestens eine Logik mit mindestens zwei Periodenzählern auf, wobei jeweils bei Nulldurchgängen mit positiver oder negativer Flanke der Signale des näher zur Rotationsachse angeordneten ersten Sensors Ablaufsteuerungen die Zähler starten oder stoppen und bei Nulldurchgängen der Signale des weiter von der Rotationsachse entfernten zweiten Sensors der zu diesem Zeitpunkt aktuelle Zählerstand als eine Zeitmarke in Registern gespeichert wird.

Den Zählern ist vorteilhaft mindestens ein Register zugeordnet wobei in dem Register der Stand des Periodenzählers bei jedem Nulldurchgang abgelegt wird und dieser dann erneut gestartet wird.

Vorteilhafte Weiterbildungen der Erfindung sind in den Unteransprüchen angegeben.

Die erfindungsgemäße Vorrichtung reduziert die Datenmenge mehrerer miteinander verknüpfter analoger Eingangssignale in einer vorteilhaften Weise so, daß eine Weiterverarbeitung der gewonnenen Informationen mit geringerem Aufwand in einer digitalen Signalverarbeitung gewährleistet ist.

In der erfindungsgemäßen SWT Sensor Signalaufbereitungs- und verarbeitungselektronik werden aus den Veränderungen der Amplitude, der Periodendauer und des Phasenbezuges der Eingangssignale Informationen gewonnen, die eine Berechnung der auf die Reifen wirkenden Quer- und Längskräfte möglich machen.

Die Vorrichtung enthält darüber hinaus Mittel um unerwünschte Störungen entweder fernzuhalten oder aber zu erkennen und dann während der nachfolgenden Datenverarbeitung rechnerisch auszugleichen.

Hierdurch ist es möglich, nur eine Signalverarbeitungseinheit, insbesondere nur einen DSP(Digitalen Signalprozessor), zur Verarbeitung der Datensätze aller Räder eines Fahrzeugs zu verwenden

Die erfindungsgemäße Vorrichtung stellt vorteilhaft eine funktionsfähige Echzeit-Signalverarbeitung für ein SWT Sensor System dar.

Sie reduziert die Fülle an Eingangsdaten sinvoll und automatisiert, damit die nachfolgende Datenverarbeitung entlastet wird und sich damit geringere Anforderungen an den Prozessor (niedrige Software-Laufzeiten, niedrige Taktfrequenz, geringere Kosten) ergeben.

Sie macht außerdem eine deterministische Weiterbearbeitung der generierten Daten möglich.

Eine Erweiterung und Verbesserung der Auswerteschaltung wird dann möglich, wenn die magnetische Codierung des Reifens nicht streng gleichförmig ist, sondern in gewissen Bereichen eine unterschiedliche Periodendauer aufweist.
Diese Abweichungen von der "normalen" Periodendauer (oder vom 50:50 Tastverhältnis) müßten so groß sein, daß sie eindeutig als Zusatzcodierung und nicht als Verformung erkannt werden können.
Hierdurch würde das Verfahren der Abspeicherung des Polmusters sicherer gemacht, da die korrekte Lage des Reifens durch das charakteristische Polmuster eindeutig erkannt werden kann.
Aufwendige Software-Verfahren zur Muster-Rückerkennung könnten entfallen.
Außerdem ließen sich Informationen über den Typ des Reifens codieren (z.B. Sommer- oder Winterreifen), die als Zusatzinformation für die Regelsoftware zu besser angepaßten Regelalgorithmen führen könnten.

Die Verwendung eines DSPs zur Datenverarbeitung ist nur ein vorteilhaftes Ausführungsbeispiel. Ein Mikroprozessor kann ebenso verwendet werden.

Die in den Figuren und in der Beschreibung verwendeten Datenwortbreiten und Taktfrequenzen zeigen eine Möglichkeit der Realisierung. Zukünftige Untersuchungen müssen zeigen, ob eine Reduktion dieser Anforderungen unter Beibehaltung ausreichender Genauigkeit möglich ist.

Bei der erfindungsgemäßen Vorrichtung handelt es sich um ein elektronisches System, das die Ausgangssignale von SWT(Seitenwandtorsions)-Sensoren zur Bestimmung der Quer- und/oder Längskräfte in einer geeigneten Weise auswertet und vorverarbeitet, so daß die daraus gewonnenen Daten zur Weiterverarbeitung in einem System zur Regelung des Fahrverhaltens, insbesondere der Fahrstabilitätsregelung, eingesetzt werden können.

Die verwendeten Sensoren detektieren Abstandsänderung und Längsverformung von KFZ-Reifen bzw. Rädern. Es handelt sich um Sensoren mit magnetoresisitiver Brücke, denen ein Verstärker mit Stromausgang bereits im Sensorkopf nachgeschaltet ist.
Das Ausgangssignal dieser Sensoren ist ein Wechselstrom mit annähernd sinusförmigem Verlauf, dessen Amplitude sich mit dem Reifenabstand und dessen Frequenz sich mit der Raddrehzahl ändert. Dem Wechselstrom ist ein Gleichstromanteil überlagert, so daß der resultierende Gesamtstrom nur ein positives Vorzeichen (in den Sensor hinein) haben kann.

Pro Rad sind zwei solcher Sensoren angebracht; die Änderung der zeitlichen Differenz der Nulldurchgänge der beiden Sensorsignale ist hierbei ein Maß für die Längsverformung der Reifens.
Die den SWT-Sensoren zugeordneten Encoder sind in oder an den Reifenseitenwänden der Räder angeordnet, in die vorzugsweise ein magnetisierbares Pulver eingebracht ist. Die Magnetisierung der Reifenseitenwände besteht aus 48 strahlenförmig angeorndneten Polpaaren N, S, die gleichmäßig über den Umfang verteilt sind und deren gedachter Ursprung sich in der Reifen bzw. Radrotationsachse befindet.

Es besteht auch die Möglichkeit, anstelle des zweiten SWT-Sensors das Ausgangssignal eines herkömmlichen Raddrehzahlsensors auszuwerten. Dieser Sensor liefert zwar keine Information über Abstandsänderungen, aber durch Ausmessen der Nulldurchgänge läßt sich nach wie vor die Längsverformung des Reifens bestimmen.
Um diesen Sensor erfindungsgemäß nutzen zu können, muß sein Polrad die gleiche Anzahl an Polen wie die der SWT Encoder aufweisen.

### 1.Funktionsgruppen der SWT-Sensor-Elektronik

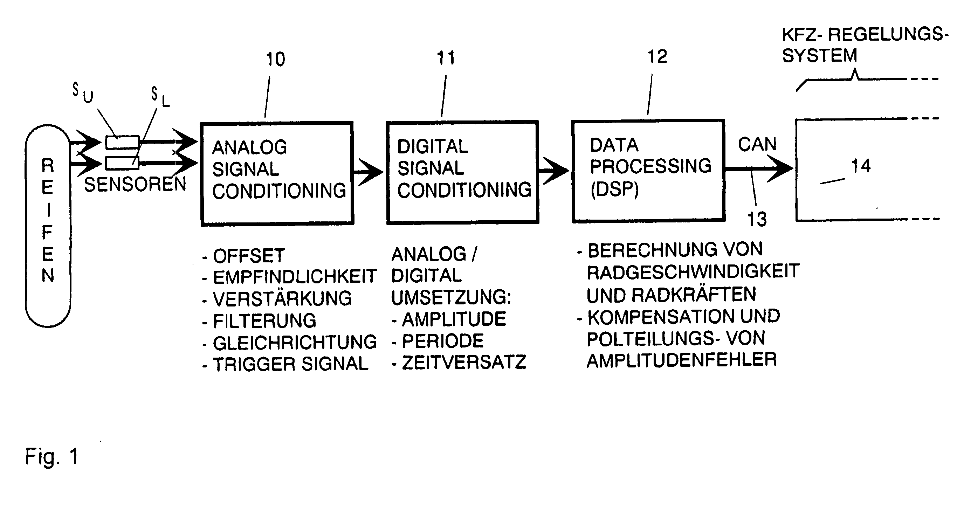

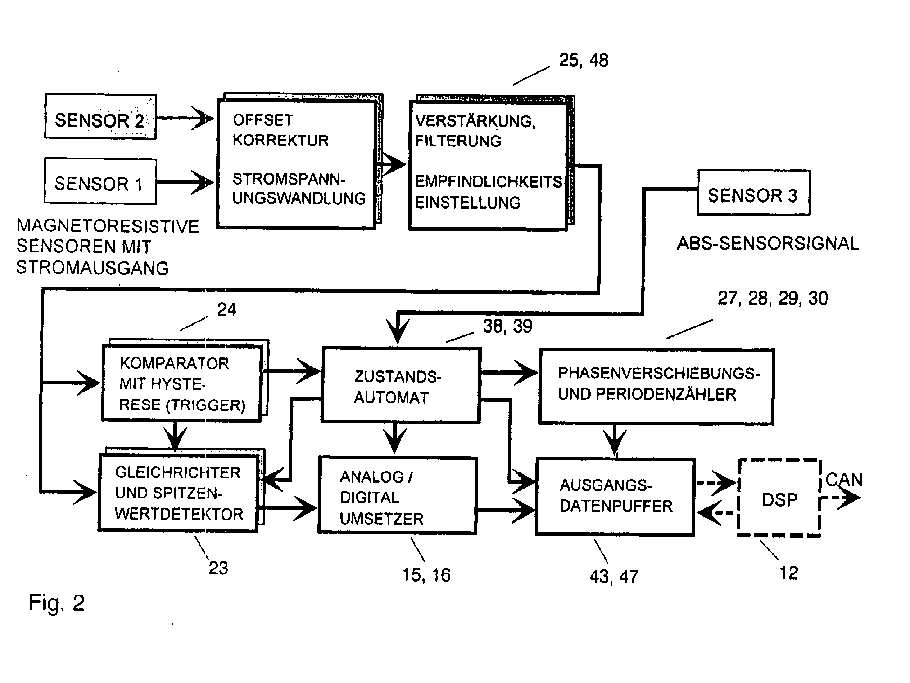

Die in Figur 1 dargestellte Schaltung weist die folgenden Funktionsgruppen auf:
- Analoge Signalaufbereitung 10
- Digitale Signalaufbereitung 11
- Digitale Signal- bzw. Datenverarbeitung 12(DSP=Digitaler Signalprozessor)
- CAN Schnittstelle 13 zur Anbindung an das Kfz-Regelungssstem 14
In der analogen Signalaufbereitung(ANALOG SIGNAL CONDITIONING) 10 werden die sinusförmigen Ausgangsstromsignale der SWT-Sensoren S_{L}, S_{U}in eine Spannung überführt und in ein Rechtecksignal gewandelt, gefiltert, an Veränderungen des Signaloffsets der Sensoren anpaßt und der Spitzenwert jeder Halbwelle erfasst.

In der digitalen Signalaufbereitung 11 erfolgt eine Umsetzung der analogen Signale in digitale Signale bzgl. der Amplitude, der Periode und des Zeitversatzes.

In der digitalen Signal- bzw. Datenverarbeitung 12 erfolgt die Ermittlung der Radgeschwindigkeit und der Radkräfte. Drüber hinaus werden Polteilungs- und Amplitudenfehler kompensiert.

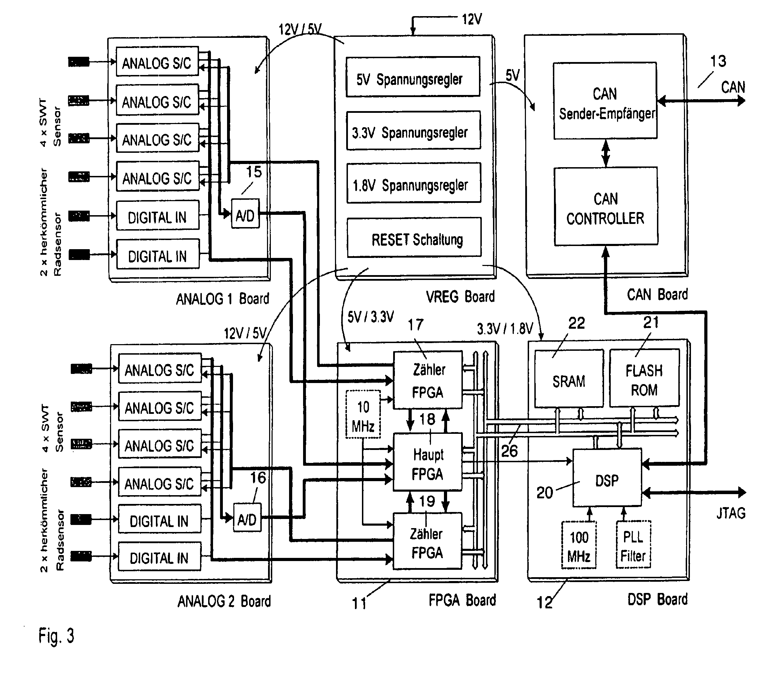

Figur 3 zeigt die Partitionierung der SWT-Sensor Schaltung. Es wird der komplette Funktionsumfang der Schaltung in einem vorteilhaften Ausführungsbeispiel gezeigt. Für jeden der acht SWT-Sensoren wird ein eigener analoger Signalaufbereitungskanal benötigt. Zusätzlich sind auch die vier herkömmlichen Radsensoren angeschlossen, um die SWT-Sensoren auch in der Konfiguration 4x SWT-Sensoren und 4x Radsensor (anstelle von 8 SWT-Sensoren) betreiben zu können.
Pro Analogkarte ist ein Analog-Digital-Wandler 15, 16 vorhanden, der von der Hauptlogik 18 (Haupt-FPGA = programmierbarer Logikbaustein) auf der FPGA-Karte ausgelesen wird.

Die Aufteilung der digitalen Signalaufbereitung 11(Digitales Signal Conditioning) in drei FPGAs 17, 18, 19ist nicht zwingend. Die Logik kann auch komplett in eine FPGA integriert werden.
Die FPGAs 17, 19zählen die Periodendauer und die Differenz der Nulldurchgänge der Sensorsignale aus. Außerdem wird der A/D-Wandler 15, 16zur Bestimmung des Signal-Spitzenwertes ausgelesen.
Wenn ein neuer Datensatz für ein Rad vorhanden ist, wird ein Unterbrechungs-(Interrupt-)Signal an die digitale Signalverarbeitung 12( DSP )gesendet, die daraufhin den Datensatz über die parallele Datenschnittstelle abholt.

Auf der DSP-Platine befinden sich neben dem Signalprozessor noch ein Flash ROM 21 zur Speicherung des DSP Programms im ausgeschalteten Zustand und ein SRAM 22 zur Speicherung von Daten und Programm während des Betriebs.

Alle digitalen Komponenten sind durch einen gemeinsamen Adreß- und Datenbus 26 verbunden.

Die Ausgabe der Kraftinformationen kann über die CAN-Schnittstelle 13 oder eine direkte Schnittstelle mit dem Hauptprozessor des Kfz.-Regelungssystems 14 (ECU = Electronic Control Unit) oder mittels einer kompletten Integration verfolgt werden.

### 2.Beschreibung der für die digitale Signalverarbeitung (DSP) aufbereiteten Datensätze

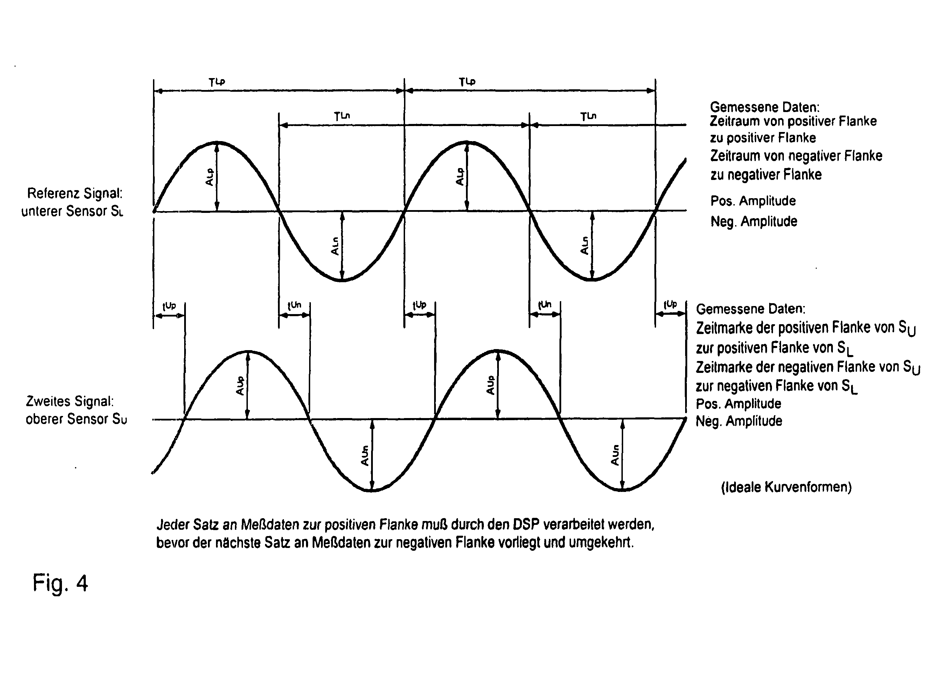

In den folgenden Figuren 4 bis 6 wird anhand beispielhafter Sensor-Signalverläufe gezeigt, welche Daten ermittelt und an die digitale Signalverarbeitung 12 (DSP) weitergegeben werden.

Zunächst wird nur auf die Standard-SWT-Konfiguration mit zwei SWT-Sensoren pro Rad eingegangen.
Der näher zur Radachse montierte Sensor wird im Folgenden "unterer Sensor" (*S*_{*L*}), der weiter nach außen montierte Sensor "oberer Sensor" (*S*_{*U*}) genannt.

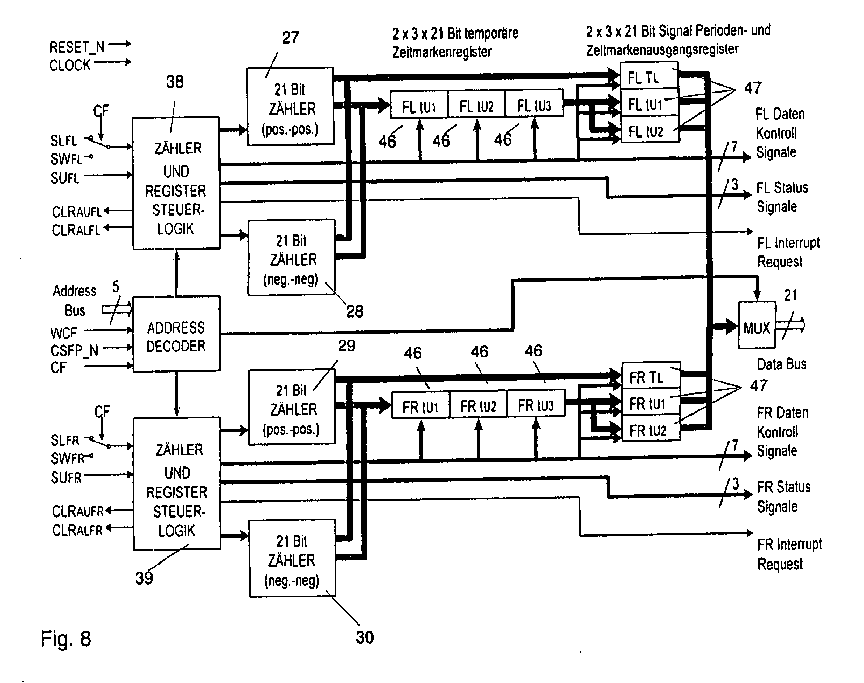

Das Signal S_{L} des unteren Sensors wird als "Referenzsignal" verwendet; das heißt, daß die Nulldurchgänge dieses Signals als Start- und Stopbedingung für den Periodenzähler 17 dienen.
Es wird nur die Periodendauer des unteren Sensors ermittelt.
Es gibt zwei Periodenzähler 27, 28 bzw. 29, 30(Figur 8) (pro Rad): der eine startet und endet bei Nulldurchgängen mit positiver Flanke, der andere bei negativen Nulldurchgängen.
Da sich die Zählperioden zeitlich überlappen, sind zwei getrennte Zähler notwendig.
Um die zeitliche Verschiebung der Nulldurchgänge der beiden Sensorsignale zu ermitteln, wird zum Zeitpunkt eines Nulldurchganges des oberen Sensorsignals der Zählerstand des Periodenzählers abgespeichert. Es wird also für den oberen Sensor *S*_{*u*} eine "Zeitmarke" (Time Stamp) als Bezug zum Periodenverlauf des unteren Sensors *S*_{*L*} gesetzt.
(Der DSP 12 berechnet dann aus dem Quotient von Periodendauer und Zeitmarke die geschwindigkeitsunabhängige Phasenverschiebung der beiden Signale.)
Weiterhin wird die Maximalamplitude *A*_{*Lp*}*,A*_{*Ln*}*,A*_{*Up*}*,A*_{*Un*} jeder Halbwelle beider Sensorsignale ermittelt.

Die Ablaufsteuerung in den Zähler-FPGAs 17, 19 funktioniert wie folgt:

Sobald ein Nulldurchgang des unteren Sensorsignals erkannt wird, wird der Stand des Periodenzählers abgespeichert und dieser erneut gestartet. Die während der aktuellen Zählperiode angefallenen Zeitmarken und Amplitudenwerte werden in Ausgangsregister übernommen. (Siehe detaillierte Beschreibung der digitalen Signalverarbeitung (Digitalen Signal Conditioning) in Abschnitt 4.)

Figur 4 zeigt den idealisierten Fall, daß während jeder Signalperiode des unteren Sensors S_{L} nur ein Nulldurchgang gleicher Polarität des oberen Sensors S_{U} auftritt. Der zum Ende der mit einer positiven Flanke gezählten Periode vorliegende Datensatz besteht demnach aus der aktuellen Periodendauer T_{Lp} und der Amplitude A_{Ln} der letzten Halbwelle des unteren Sensors S_{L}, der Zeitmarke t_{Up} des Nulldurchganges des oberen Sensors Sᵤ sowie der Amplitude A_{Un} der letzten Halbwelle vor Erreichen der Zeitmarke.

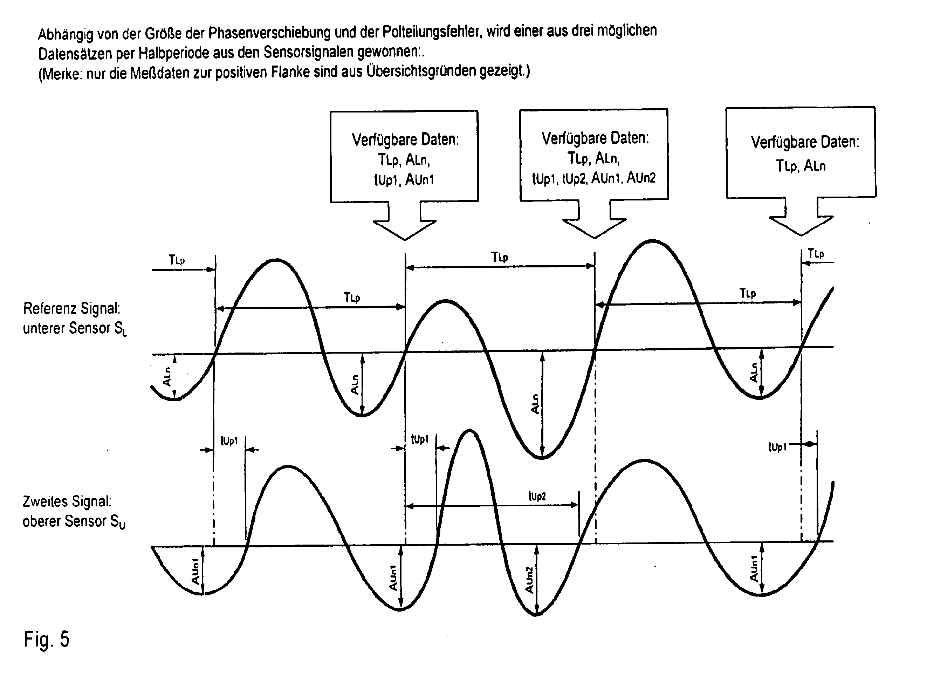

Die Zuordnung der Datensätze ist in Figur 5 dargestellt. Dabei bezeichnen T_{Lp} = Periodendauer, A_{Ln} = Amplitude des unteren Sensors S_{L}, t_{Up1} = erste Zeitmarke des oberen Sensors S_{U}, A_{Un1} = Amplitude des unteren Sensors, t_{Up2} = zweite Zeitmarke. Die Indizes p und n zeigen, ob die Daten zum positiven oder negativen Zähler bzw. zur positiven oder negativen Amplitude gehören. Hier ist außerdem zu erkennen, daß der idealisierte Fall von immer gleichartigen Datensätzen, wie in Figur 4 dargestellt, in der Praxis nicht gilt:
Durch Polteilungsfehler des Encoders kommt es vor, daß während einer Periode des unteren Sensors das Signal des oberen Sensors einen, zwei oder gar keinen Nulldurchgang in der gleichen Polarität wie die aktuell vermessene Periode hat.

Diese Fälle sind in Figur 5 dargestellt; hierbei ist zu beachten, daß aus Gründen der Übersichtlichkeit nur die Daten der Messungen von positiver zu positiver Flanke gezeigt sind (in Wirklichkeit fällt die doppelte Datenmenge an).

Zu einem vergrößerten Datensatz kann es kommen, wenn die Periodendauer des oberen Sensorsignals größer als die des unteren ist und die Phasenverschiebung der beiden Signale relativ klein ist.
Da in diesem Fall die eigentlich zur nächsten Periode gehörige Zeitmarke und Amplitude "vorzeitig" ausgewertet wird, fallen in der nächsten betrachteten Periode keine Daten des oberen Sensors mehr an.
Es ist Aufgabe der digitalen Signalverarbeitung, des DSPs, diese "vorzeitig" gelieferten Daten der entsprechenden Periode zuzuordnen. Als Plausibilitätskontrolle wird hierbei die Tatsache genutzt, daß die Anzahl der Perioden beider Sensorsignale über eine Radumdrehung konstant (bei der vorliegenden Polteilung = 48) sein muß.

Zu jedem Datensatz gehören also für den unteren Sensor die Periodendauer und genau ein Amplitudenwert; für den oberen Sensor können es keine, eine oder zwei Zeitmarken und die entsprechende Anzahl Amplitudenwerte sein.

Falls ein SWT-Sensor und ein herkömmlicher Radsensor verwendet werden, besteht der Datensatz aus der Periodendauer des Radsensors sowie null bis zwei Zeitmarken und der entsprechenden Anzahl von Amplitudenwerten des SWT-Sensors.

Die Phasenverschiebung der Signale im vorzugsweise längs- und querkraftfreien Zustand ist durch die Anordnung der Sensoren gegenüber dem Encodermuster gegeben. Der Betrag der Phasenverschiebung kann zwischen 0 und 2n liegen; die elektronische Vorrichtung funktioniert mit beliebigen Ausgangswerten.
Selbst Ausgangswerte der Phasenverschiebung größer als eine Periode wären möglich, da die Signaländerung durch Verformung der Reifenseitenwand aufgrund von Längskräften bei dem hier gewählten Polmuster geringer als die Hälfte einer Periode ist.

Zur Steuerung der A/D-Wandler 15, 16 wird ebenso wie als Eingangssignal für die Zähler 27 bis 30 ein von der analogen Signalaufbereitung 10(Analogelektronik) aus dem Sensorsignal erzeugtes Digitalsignal gleicher Phasenlage und Periodendauer benutzt ("Trigger Signal").

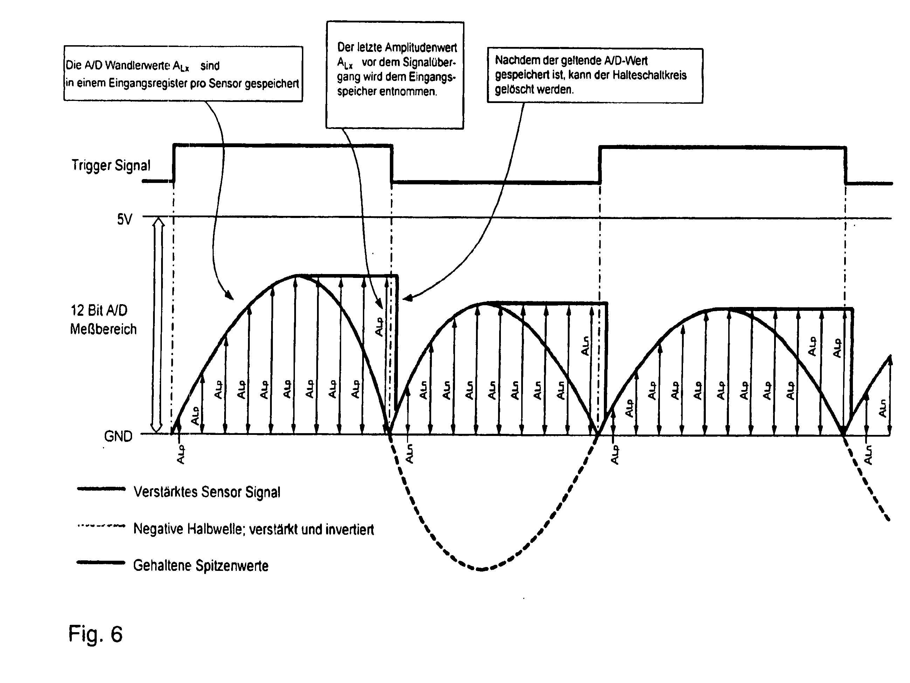

Figur 6 zeigt den Ablauf der Bestimmung der Maximalamplitude für einen Sensorkanal.
Um die Auflösung des A/D-Wandlers 15, 16 optimal auszunutzen, wird das Sensorsignal verstärkt, gleichgerichtet und auf Masse bezogen.
Der A/D-Wandler 15, 16 tastet das Signal hinter dem Halteglied 36 wiederholt ab und schreibt den aktuellen Wert in ein Eingangsregister 42 im Haupt-FPGA 18.

Wenn ein Flankenwechsel des Trigger Signals erfolgt, stellt die Ablaufsteuerung in der digitalen Signalaufbereitung (Digitalen Signal Conditioning) fest, daß nun die Maximalamplitude des Signals verstrichen sein muß, weil ein aktuelles Minimum erkannt wurde.
In der Halteschaltung 23 und im Eingangsregister 42 ist jedoch noch der Maximalwert der vergangenen Halbperiode gespeichert.

Daher wird der letzte abgetastete Wert vom Eingangsregister 42 in das Ausgangsregister 43 verschoben, und die Halteschaltung 36 kann zur Messung der nächsten Halbperiode neu initialisiert werden.

### 3.Analoge Signalaufbereitung (Analoges Signal Conditioning)

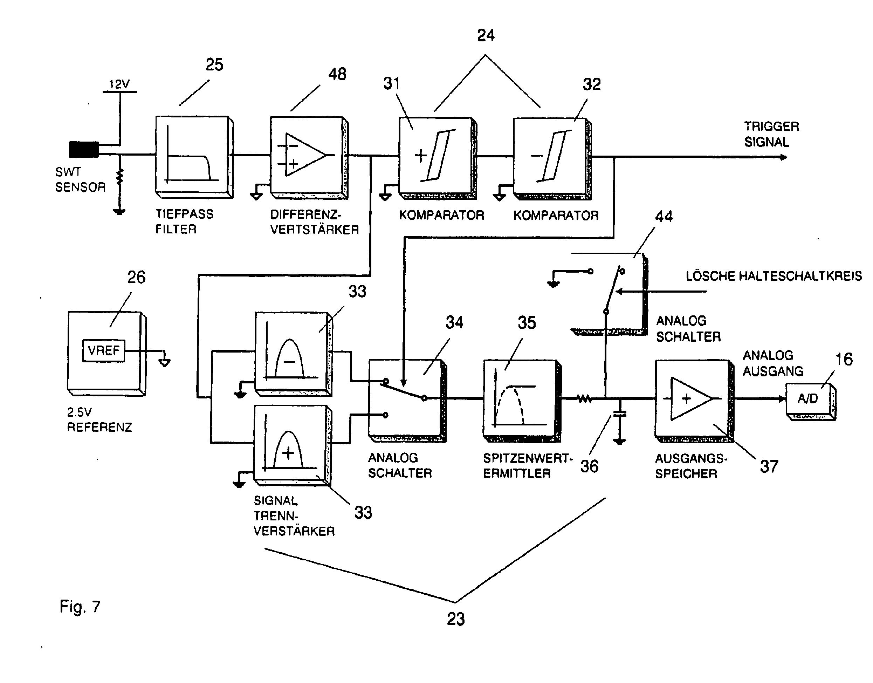

Der SWT-Sensor wird über eine Zweidrahtschnittstelle an 12V und an den Eingang der Elektronik angeschlossen. Die Strom-Spannungs-Wandlung wird hier beispeilhaft über einen Arbeitswiderstand nach Masse durchgeführt (Figur 7).
Ein Tiefpaßfilter 25 zur Eliminierung von Signalstörungen schließt sich an.

Die Analogelektronik arbeitet beispielsweise nur mit 5V Spannungsversorgung; es sind jedoch noch andere Konzepte denkbar (pos. und neg. Versorgung).
Zur weiteren Signalverarbeitung wird das Eingangssignal zunächst auf 2.5V als Referenzpegel 26 bezogen.

Nach einer vorteilhaften Ausbildung der analogen Signalaufbereitung wird dies durch eine analoge, kontinuierliche Nullpunktkorrektur erzielt. Dies kann zu Ungenauigkeiten in der Signalauswertung führen, falls sich der Signaloffset des SWT Sensors sprunghaft ändern würde. Eine weitere Ausführung der Vorrichtung sieht daher keine kontinuierliche Offsetkompensation vor, sondern beinhaltet eine vom DSP gesteuerte, diskrete Anpassung der Schaltung an unterschiedliche Eingangsoffsets. Die Schaltung ist dabei so ausgelegt, daß sie reagiert, bevor sich das vertärkte Eingangssignal aus dem Wertebereich entfernt. Vorteilhaft kann dies über einen vom DSP gesteuerten Digital/Analog-Wandler der Eingangsstufe erreicht werden.

Ein Komparator 24erzeugt aus dem sinusförmigen Analogsignal ein Rechtecksignal mit 5V CMOS Logikpegeln, das als Eingangssignal für die nachfolgende Digitalschaltung dient.
Dieser Komparator benötigt eine definierte Eingangshysterese, damit geringe Störungen und Rauschen nicht zu einer Fehltriggerung führen. Andererseits darf die Hysterese nicht zu groß sein, damit der Nulldurchgang von langsamen Signalen mit kleinen Amplituden noch hinreichend genau detektiert wird.
Der in Figur 7 gezeichnete zweite Komparator 32 ist dabei nicht zwingend notwendig; er kann dazu verwendet werden, um ein phasenrichtiges Digitalsignal zu erzeugen.

Im unteren Teil von Figur 7 wird die analoge Signalaufbereitung für die Amplituden-Spitzenwert-Halteschaltung gezeigt. Zunächst wird die positive und negative Halbwelle in einem Signal Trennverstärker 33 getrennt verstärkt und auf 0V bezogen, um die Auflösung des A/D-Wandlers 16 optimal auszunutzen. Die negative Halbwelle wird hierbei invertiert.

Ein vom Triggersignal gesteuerter Analogschalter 34 schaltet nun phasenrichtig entweder die positive oder die negative Halbwelle auf den Eingang des Spitzenwertermittlers 35 durch.

Der an dessen Ausgang angeschlossene Kondensator 36 speichert die Maximalspannung der momentanen Halbwelle. Um den Kondensator 36 so wenig wie möglich zu belasten, ist dem A/D-Wandler 16 ein Ausgangspuffer 37 vorgeschaltet.

Wenn die digitale Signalaufbereitungs 11 (Digitale Signal Conditioning)-Logik den Flankenwechsel des Triggersignals detektiert hat und somit feststellt, daß der Spitzenwert der Halbwelle die Schaltung passiert haben muß, wird der am Kondensator 36 gehaltene Spannungswert über einen zweiten Analogschalter 44 gelöscht.

Da auch der erste Analogschalter inzwischen umgesprungen ist, arbeitet die Schaltung sofort wieder an der Detektion der nächsten Halbwelle.

### 4.Digitale Signalaufbereitung (Digitales Signal Conditioning)

Die beiden FPGAs 17, 19 mit den Periodenzählern 27 bis 30 gemäß Figur 8 sind identisch aufgebaut; allein die Belegung des Eingangspins WCF entscheidet, ob das Bauteil für die Vorderachse oder Hinterachse des Kraftfahrzeugs eingesetzt wird (unterschiedliche Konfiguration der Adressen).

Die Schaltung benötigt pro Rad zwei Eingangssignale: entweder zwei SWT-Sensorsignale (S_{U} und S_{L}) oder einen SWT-Sensor (S_{U}) und einen Radsensor (SW), dessen Signal schon digital vorliegt (Signalabgriff in dem Kfz.-Regelungssystem 14).

Im Falle des Betriebs mit zwei SWT-Sensoren S_{L}, S_{U} ist der untere Sensor SL der Referenzsensor zur Steuerung des Periodenzählers, da davon ausgegangen wird, daß das näher an der Felge abgegriffene Sensorsignal weniger störungsbehaftet ist als das radäußere Signal (Eigenresonanzen im Gummi).
Wenn nun aber ein SWT-Sensorsignal zugunsten des Radlagersensors wegfallen soll, dann muß dies der untere SWT-Sensor sein, da bei Wegfall des oberen (radäußeren) Sensors der erzielte Signalbereich zu gering wäre.
(Nur sehr geringe Verschiebung der Reifenseitenwand zwischen Felgenrand und radinnerem SWT-Sensor bei Einwirkung von Längskräften.)
In diesem Fall ist der Radlagersensor SW der Referenzsensor.

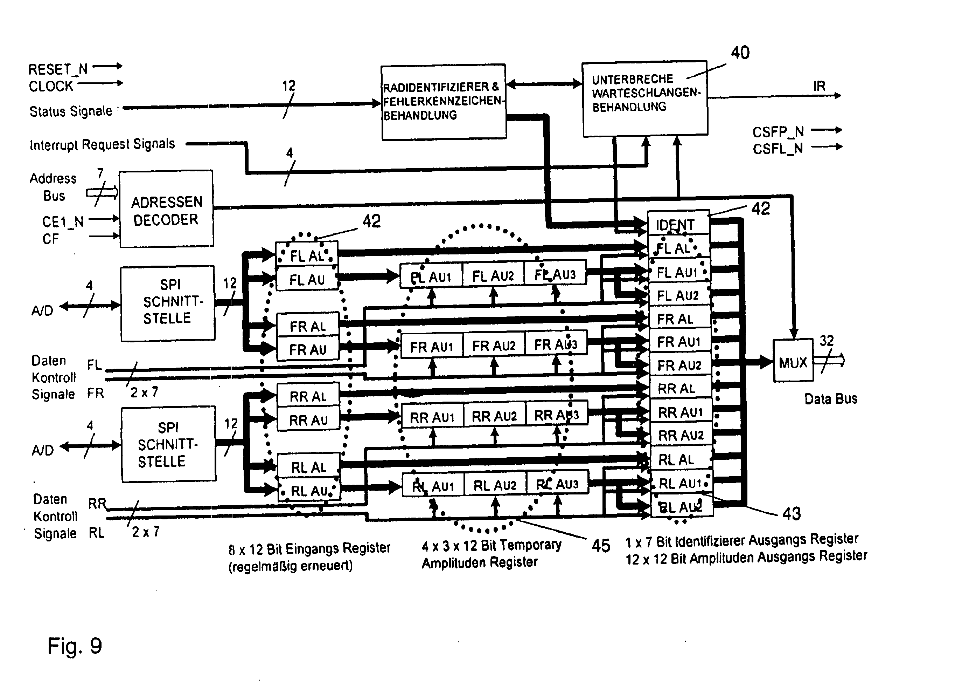

Die "Zähler und Register Kontroll Logik" 38, 39 steuert das Rücksetzen und Inkrementieren der Periodenzähler anhand der Signalwechsel des Referenzsignals.
Bei jedem Signalwechsel des zweiten Eingangssignals wird der aktuelle Zählerstand in ein Zwischenregister 46 abgespeichert. Hierbei muß unterschieden werden, zu welchem der beiden Zähler die Zeitmarke zugehörig ist.
Wenn der zweite Signalwechsel des Referenzsignals eintrifft, wird der Phasenzähler der entsprechenden Polarität gestoppt, dessen Endwert (T_{L}) in das Ausgangsregister 47 kopiert und die zugehörigen Zeitmarken des anderen Sensors (t_{U1}, t_{U2}) ebenfalls in die Ausgangsregister übernommen.
(Wie bei der Beschreibung von Figur 5 ausgeführt, kann es sich um keine, eine oder zwei Zeitmarken handeln.)
Wenn die Daten in das Ausgangsregister übernommen wurden, löscht die Kontroll Logik 38, 39 das Halteglied 35, 36 des entsprechenden Sensorkanals durch Setzen des Signals CLR.
Ein "Interrupt Request" wird an das Haupt-FPGA 18(gemäß Figur 9) gesendet, zum Zeichen, daß neue Daten zur Abholung bereitliegen.

Die drei temporären Register 46 für die Zeitmarken des zweiten Sensors werden aus folgenden Gründen benötigt:
Zum einen können die Ausgangsregister nicht sofort vom DSP abgeholt werden, so daß eine sehr früh im der nächsten Periode auftretende Zeitmarke verloren ginge, könnte sie nicht zwischengespeichert werden.
Außerdem speichern beide Zähler 27, 28 bzw. 29, 30 (positivpositiv und negativ-negativ) ihre zugehörigen Zeitmarken in die gleichen Register ab, so daß zu bestimmten Zeitpunkten eine Umspeicherung innerhalb der drei Register vorgenommen werden muß.
Natürlich könnte man für jeden Zähler dedizierte Register vorsehen; dies würde jedoch wegen der großen Bitbreite einen erheblichen Logikaufwand bedeuten.

Aus der gemeinsamen Verwendung der Ausgangsregister für Datensätze beider Signalflanken ergibt sich eine Geschwindigkeitsbedingung für den DSP:
Da sich die Räder des Fahrzeugs unabhängig voneinander bewegen, fallen die Datensätze für alle vier Räder völlig asynchron an; also im ungünstigsten Fall alle vier zur geichen Zeit.
Nach einer halben Periode müssen die Daten in den Ausgangsregistern jedoch abgeholt sein, sonst werden sie von den neuen Daten überschrieben.
Daher muß der DSP die Datensätze aller vier Räder in 1/8 einer Periodendauer abholen und verarbeiten können, sonst könnten Daten verloren gehen.
Die gewünschte Maximalgeschwindigkeit, bei der das System betrieben werden soll, setzt hierbei die obere Grenze für die erlaubte Rechenzeit im DSP.

Bei sehr niedrigen Radgeschwindigkeiten (kleiner 0.5 km/h) kann der Periodenzähler 27, 28, 29, 30 die Periodendauer nicht mehr zu Ende zählen. Ab einem bestimmten Zählerwert wird ein Überlaufbit gesetzt und der Zähler neu gestartet. Es wird ebenfalls ein "Interrupt Request" gesendet.
Das Statusflag TCOF macht eine Unterscheidung möglich, ob der Interrupt durch einen Überlauf des Zählers oder durch einen wirklichen Signalwechsel ausgelöst wurde. Liegt ein Überlauf vor (oder mehrere hintereinander), so kann der DSP die Zeiten bis zum nächsten wirklichen Signalwechsel aufsummieren. Hierdurch wird dem DSP ermöglicht, trotz Stillstand und Wiederanfahren des Fahrzeugs die neuen Polmuster den alten Werten noch eindeutig zuzuordnen.
Dies ist zur Fehlerkorrektur des Encoder-Polmusters sinnvoll.

Es werden pro Rad drei Statussignale bereitgestellt:

| | |
|---|---|
| PED (pos. edge data): | Zuordnung der Daten: aus Messung von pos. zu pos. oder von neg. zu neg. Flanke |
| TCOF (T counter overflow): | Überlauf des Periodenzählers |
| EF (error flag): | es wurden mehr als zwei S_{U}-Flanken während einer halben S_{L}-Periode detektiert(Fehlerfall; nur durch Störungen möglich) |

### 5.Hauptlogik (Haupt-FPGA)

Figur 9 zeigt das Haupt-FPGA 18, das für die Verwaltung der "Unterbrechungs-Anforderungen" (Interrupt Requests) der Zähler-FPGAs 17, 19 und für das Auslesen und Speichern der A/D-Wandler 15, 16 Daten zuständig ist.

Die 2x4 Kanäle der A/D-Wandler werden kontinuierlich reihum ausgelesen und in die Eingangsregister 42 geschrieben. Wie bei der Erklärung zu Figur 6 schon angedeutet, muß bei Flankenwechsel des oberen Sensors der letzte gespeicherte Amplitudenwert aus dem Eingangsregister 42 in ein Ausgangsregister 43 übernommen werden.
Diese Vorgangsweise ist möglich, wenn das Eingangsregister auch während ¼ der minimal erlaubten Signalperiode mindestens einmal neu beschrieben wird (damit ist sichergestellt, daß der letzte Abtastwert auf jeden Fall zeitlich hinter dem Spitzenwert des Sinussignals liegt).
Die Ansteuerung der A/D-Wandler ist entsprechend einzustellen.

Da jedoch zu jeder Zeitmarke des oberen Sensors auch ein Amplitudenwert gehört, müssen diese Amplitudenwerte analog zu den Zeitmarken vorläufig in eines von drei Zwischenregistern abgespeichert werden.
Die Steuersignale für die Amplitudenregister 42, 45, 43 werden von den Zähler-FPGAs geliefert, da dort die entsprechende Verwaltungslogik für die Zeitmarken schon vorhanden ist.
Bei Ablauf der Periode des unteren Sensors werden wie in den Zähler-FPGAs nun die Amplitudenwerte in die Ausgangsregister übernommen.

Die eingehenden Interrupt-Anfragen der Zähler-FPGAs werden in einer Warteschleife 40 verwaltet. Sobald ein Interrupt Request eintrifft, wird das Interrupt-Signal IR an den DSP aktiviert, falls nicht gerade noch Daten des vorherigen Interrupts abgeholt werden.
In diesem Falle wird die Interrupt-Anfrage gespeichert, bis der vorherige Vorgang beendet ist. So wird vermieden, daß bei gleichzeitig anfallenden Datensätzen mehrerer Räder nur ein IR-Signal ausgelöst wird.

Zur Information über die abzuholenden Datenpakete und den Status der Signalvorverarbeitung gibt es ein Identifikationsregister 41 IDENT, das vom DSP über den Datenbus ausgelesen werden kann.

Dieses Register enhält folgende Statussignale:

| | |
|---|---|
| WDD[1:0] (wheel data designator): | zeigt an, von welchem der vier Räder ein neues Datenpaket vorliegt |
| WDL (wheel data lost): | ein nicht abgeholter Datensatz dieses Rades wurde durch neue Werte überschrieben(Fehlerfall; sollte eigentlich nicht vorkommen) |
| NDA (no data available): | es liegen keine neuen Daten vor |
| PED (pos. edge data): | Zuordnung der Daten: aus Messung von pos. zu pos. oder von neg. zu neg. Flanke |
| TCOF (T counter overflow): | Überlauf des Periodenzählers |
| EF (error flag): | es wurden mehr als zwei S_{U}-Flanken während einer halben SL-Periode detektiert |
| | (Fehlerfall; nur durch Störungen möglich) |

### 6.Ablauf des Datentransfers zum DSP

Sobald das Haupt-FPGA ein Interrupt(IR)-Signal zum DSP 12 schickt, liest dieser zunächst das Identifikationsregister 41 IDENT aus.

Die Statussignale WDD[1:0] zeigen an, um welches der vier Räder es sich handelt. Danach liest der DSP nur die Adressen aus, die zu diesem Rad zugehörig sind.
(Periodendauer (47) und Zeitmarken (47) aus den Zähler-FPGAs 17, 19, Amplitudenwerte (43) aus dem Haupt-FPGA 18.)
Sind alle Daten abgeholt, dann wird erneut die Adresse für das IDENT-Register angelegt, um den erfolgten Datentransfer zu quittieren.
Die Interruptverwaltung im Haupt-FPGA erkennt die IDENT-Adresse und schaltet die gelesenen Register für die nächsten zu übernehmenden Werte frei.
(Die hierzu nötigen Steuersignale DSP_EN[3:0] sind aus Gründen der Übersichtlichkeit nicht in den Figuren 7 bis 9 eingezeichnet.)

Wenn bereits ein weiterer Interrupt in der Warteschleife steht, wird nun das IDENT Register mit den neuen Werten belegt und das nächste IR-Signal gesendet.
Andernfalls bleibt das System in Wartestellung, bis von einem der Zähler-FPGAs eine neue Interrupt-Anfrage vorliegt.

Falls im IDENT-Register das Bit WDL gesetzt ist, heißt dies, daß zwischen dem letztmaligen und dem jetzigen Lesen des durch WDD identifizierten Rades ein Datensatz desselben Rades verloren wurde.
Das bedeutet, daß beim Abspeichern eines Polmusters des Encoders eine Speicherstelle übersprungen werden muß.
Eine Erweiterung des WDL-Bits, die auch bei mehreren verlorenen Datensätzen deren korrekte Anzahl wiedergeben würde ist denkbar, aber in der hier vorgestellten Schaltung nicht realisiert.
Das WDL-Bit kann durch zwei unterschiedliche Vorgänge gesetzt werden, die jedoch nach außen hin die gleiche Auswirkung haben:

Entweder wurde ein Datensatz nicht in die Ausgangsregister übernommen, weil diese gerade gelesen und deswegen durch DSP_EN blockiert wurden; oder bereits in der Interrupt-Warteschlange stehende Informationen wurden durch ein Überschreiben der Ausgangsregister mit nachfolgenden Daten ersetzt.
In beiden Fällen führt die ursprüngliche Interrupt-Anforderung des Zähler-FPGAs nicht zu einem IR an den DSP. Erst die nachfolgende Interrupt-Anforderung dieses Rades wird wieder zum DSP gesendet; hierbei ist dann im IDENT-Register das WDL-Bit gesetzt.

Wenn keine Daten in einem Register 43, 47 vorliegen (z.B. im üblichen Fall, wenn nur eine Zeitmarke für SU während der Signalperiode von SL auftrat), dann ist jedes Bit des nicht benutzten Registers mit dem Wert '1' belegt.
Dieser Registerinhalt ist im normalen Betrieb als Zahlenwert nicht erlaubt und wird als Fehler erkannt.

Weitere vorteilhafte Ausführungsbeispiele nach der Erfindung sehen
- die Berechnung der Fläche des Signals über der Nulllinie als Maß für die Querkraft (Abtastung der Kurvenform, Integration) oder
- die Mittelwertbildung (Gleichrichtung) des Signals als Maß für die Querkraft
- vor.
   Darüber hinaus kann bei der Vorrichtung
- eine Ankopplung der Sensoren über einen vom DSP kontrollierten stufenweisen Ausgleich, d.h. ohne automatischen Ausgleich des Signaloffsets, und/oder
- eine vom DSP kontrollierte einstellbare Verstärkung zur Optimierung der Amplitudenmessung
vorteilhaft erfolgen.

## Patentansprüche

1. Vorrichtung mit mindestens zwei Sensoren, insbesondere Reifen-Seitenwandtorsions(SWT)-Sensoren, für ein Kfz-Regelungssystem, die in unterschiedlichem Abstand zur Reifenrotationsachse stationär am Chassis bzw. der Radaufhängung angebracht und die mit mindestens einem auf oder in der Reifenwandung angebrachten oder mit mindestens einem auf oder in der Reifenwandung angebrachten und einem herkömmlichen, Pole aufweisenden Encoder zusammenwirken und die Ausgangssignale oder Ausgangsinformationen der Sensoren nach einer Auswertung dem Kfz-Regelungssystem zugeführt werden, **dadurch gekennzeichnet, daß** zwischen dem Kfz- Regelungssystem und den Sensoren mindestens eine analoge und eine digitale Signalaufbereitung (10, 11) und/oder -verarbeitung (12) vorgesehen ist, wobei in der analogen Signalaufbereitung (10) die sinusförmigen Ausgangsstromsignale der Sensoren S_{L}, S_{U} in eine Spannung überführt und in ein Rechtecksignal gewandelt, gefiltert, an Veränderungen des Signaloffsets der Sensoren anpaßt und der Spitzenwert jeder Halbwelle erfasst wird und in der digitalen Signalaufbereitung (11) eine Umsetzung der analogen Signale in digitale Signale bzgl. der Amplitude, der Periode und des Zeitversatzes erfolgt.

2. Vorrichtung nach Anspruch 1, **dadurch gekennzeichnet, daß** die Sensoren S_{L}, S_{U} mindestens zwei, bzgl. einer Änderung der Phasenlage und mindestens ein, bzgl. der Änderung der Amplitude bewertbare Ausgangssignale als im wesentlichen sinusförmige Wechselstromsignale der analogen Signalaufbereitung und/oder -verarbeitung (10) zur Verfügung stellen.

3. Vorrichtung nach Anspruch 1 oder 2, **dadurch gekennzeichnet, daß** der analogen Signalaufbereitung (10) und/oder -verarbeitung mindestens ein Analog-Digitalwandler (15, 16) zum Ermitteln der Amplitude zugeordnet ist.

4. Vorrichtung nach einem der Ansprüche 1 bis 3, **gekennzeichnet durch** eine analoge Signalaufbereitung (10) mit einem Wandler , der das sinusförmige Wechselstromsignal in eine Spannung überführt,
einem Filter (25), der Signalstörungen unterdrückt
einer Offsetkompensationseinheit (26, 12), der die Signalaufbereitung und/oder -verarbeitung an Veränderungen des Signaloffsets des Sensors anpaßt,
einer Triggerschaltung (24, 32), die das sinusförmige (Analog)Signal in ein Rechtecksignal wandelt und
einer Amplitudenermittlung (23, 33, 34, 35, 36), die den Spitzenwert jeder Halbwelle erfasst.

5. Vorrichtung nach einem der Ansprüche 1 bis 4, **gekennzeichnet durch** eine Amplitudenermittlung mit
einem Trennverstärker (33), der die positive und negative Halbwelle getrennt verstärkt
einem Invertierer, der die negative Halbwelle umkehrt einem von dem am Ausgang der Triggerschaltung anstehenden Signal getriggerten Schalter (34), der phasenrichtig die positive oder negative Halbwelle auf den Eingang eines Amplitudenwertdetektors (35) schaltet
einem Register (36), das den Wert der Amplitude festhält und einem von der digitalen Signalaufbereitung und/oder - verarbeitung (11) kontrollierten Schaltung (44) zum Löschen des Registers (36).

6. Vorrichtung nach einem der Ansprüche 1 bis 5, **dadurch gekennzeichnet, daß** die digitale Signalaufbereitung (11) mindestens eine Logik (17, 18, 19)mit mindestens zwei Periodenzählern (27, 28, 29, 30) aufweist, wobei jeweils bei Nulldurchgängen mit positiver oder negativer Flanke der Signale des näher zur Rotationsachse angeordneten ersten Sensors S_{L} Ablaufsteuerungen die Zähler (27, 28, 29, 30) starten oder stoppen und bei Nulldurchgängen der Signale des weiter von der Rotationsachse entfernten zweiten Sensors S_{U} der zu diesem Zeitpunkt aktuelle Zählerstand als eine Zeitmarke in Registern (46, 47) gespeichert wird.

7. Vorrichtung nach einem der Ansprüche 1 bis 6, **dadurch gekennzeichnet, daß** den Zählern (27, 28, 29, 30) mindestens ein Register (42, 43, 45, 46, 47) zugeordnet ist und in dem Register (42, 43, 45, 46, 47) der Stand des Periodenzählers (27, 28, 29, 30) bei jedem Nulldurchgang abgelegt wird und dieser dann erneut gestartet wird.

8. Vorrichtung nach einem der Ansprüche 1 bis 7, **dadurch gekennzeichnet daß** die Logik (17, 18, 19) eine Unterbrechungsverwaltung (INTERRUPT QUEUE HANDLING) aufweist, die die Reihenfolge der an die digitale Signalverarbeitung (12) weiterzuleitenden Zählerdaten festlegt und die eine Unterbrechungsanforderung an die digitale Signalverarbeitung (12) sendet.

9. Vorrichtung nach einem der Ansprüche 1 bis 8, **dadurch gekennzeichnet, daß** in der Signalaufbereitung (11) ein Register(IDENT) (41) vorgesehen ist, in dem Statussignale beispielsweise zum Identifizieren der Reifen bzw. Räder der in Registern (42, 43, 45, 46, 47) abgelegten Zählerdaten abgelegt sind.

10. Vorrichtung nach einem der Ansprüche 1 bis 9, **dadurch gekennzeichnet, daß** von der digitalen Signalverarbeitung (12) auf die Unterbrechungsanforderung hin das Register(IDENT) (41) gelesen wird, daraufhin die Register (42, 43, 45, 46, 47)mit den Zeit- und Amplitudenwerten gelesen werden und aus diesen Daten die Phasenverschiebung ermittelt und die Phasenverschiebungen und Amplituden über eine Vergleich mit Referenzwerten bewertet werden.

11. Vorrichtung nach einem der Ansprüche 1 bis 10, **dadurch gekennzeichnet, daß** aus der Phasenverschiebung, der Amplitude und der Amplitudenveränderung die Längs- und/oder Querkräfte des Reifens berechnet werden.

## Claims

1. A device comprising at least two sensors, especially tire sidewall torsion (SWT) sensors for a motor vehicle control system, with such sensors being mounted at varying distances from the tire rotational axis on the chassis or wheel suspension in a stationary manner and with such sensors interacting with at least one encoder mounted on or in the tire wall or with at least one conventional encoder mounted on or in the tire wall and including poles, and with the output signals or output information of the sensors being transmitted to the motor vehicle control system after having been evaluated,
**characterized in that** at least one analog and one digital signal conditioning unit (10, 11) and/or processing unit (12) is provided between the motor vehicle control system and the sensors, and in the analog signal conditioning unit (10) the sinusoidal output current signals of the sensors S_{L}, S_{U} are transformed into a voltage and converted into a rectangular signal, filtered, adapted to changes in the signal offset of the sensors and the peak value of every half-wave is detected, while in the digital signal conditioning unit (11) the analog signals are converted into digital signals with respect to the amplitude, the period and the time offset.

2. A device according to claim 1,
**characterized in that** the sensors S_{L}, S_{U} provide at least two output signals which can be evaluated in relation to a change in the phase angle and at least one output signal which can be evaluated in relation to a change in amplitude, the output signals being in the form of essentially sinusoidal alternating current signals and being sent to the analog signal conditioning and/or processing unit (10).

3. A device according to claim 1 or 2,
**characterized in that** at least one analog-to-digital converter (15, 16) for determining the amplitude is associated with the analog signal conditioning (10) and/or processing unit.

4. A device according to one of the claims 1 to 3,
**characterized by** an analog signal conditioning unit (10) with a converter that transforms the sinusoidal alternating current signal into a voltage,
a filter (25) that suppresses signal interferences,
an offset compensation unit (26, 12) that adapts the signal conditioning and/or processing to changes in the signal offset of the sensor,
a trigger circuit (24, 32) that converts the sinusoidal (analog) signal into a rectangular signal, and
an amplitude determining unit (23, 33, 34, 35, 36) that detects the peak value of every half-wave.

5. A device according to one of the claims 1 to 4,
**characterized by** an amplitude determining unit with an isolation amplifier (33) that separately amplifies the positive and negative half-wave,
an inverter that reverses the negative half-wave,
a switch (34) triggered by the signal being applied to the output of the trigger circuit, which switches the positive or negative half-wave to the input of an amplitude value detector (35) in correct phase sequence,
a register (36) that retains the value of the amplitude, and
a circuit (44) checked by the digital signal conditioning and/or processing unit (11) for deleting the register (36).

6. A device according to one of the claims 1 to 5,
**characterized in that** the digital signal conditioning unit (11) includes at least one logic (17, 18, 19) with at least two period counters (27, 28, 29, 30), and **in that** sequencing control starts or stops the counters (27, 28, 29, 30) whenever there are zero crossovers with a positive or negative edge in connection with the signals of the first sensor S_{L} arranged closer to the rotational axis, while the counter content effective at this time is saved in registers (46, 47) as a time stamp whenever there are zero crossovers of the signals of the second sensor S_{U} arranged further away from the rotational axis.

7. A device according to one of the claims 1 to 6,
**characterized in that** at least one register (42, 43, 45, 46, 47) is associated with the counters (27, 28, 29, 30), and that the content of the period counter (27, 28, 29, 30) is written into the register (42, 43, 45, 46, 47) whenever a zero crossover occurs, and the counter is then restarted.

8. A device according to one of the claims 1 to 7,
**characterized in that** the logic (17, 18, 19) includes an interrupt queue handling (INTERRUPT QUEUE HANDLING) which defines the order of the counter data to be forwarded to the digital signal processing unit (12) and sends an interrupt request to the digital signal processing unit (12).

9. A device according to one of the claims 1 to 8,
**characterized in that** a register (IDENT) (41) is provided in the signal conditioning unit (11), in which status signals, for example for identifying the tires or wheels, of the counter data saved in the registers (42, 43, 45, 46, 47) are filed.

10. A device according to one of the claims 1 to 9,
**characterized in that** the register (IDENT) (41) is read by the digital signal processing unit (12) following the interrupt request, whereupon the registers (42, 43, 45, 46, 47) with the time and amplitude values are read and the phase shift is determined from this data, and the phase shifts and amplitudes are evaluated by means of a comparison with reference values.

11. A device according to one of the claims 1 to 10,
**characterized in that** the longitudinal and/or transversal forces of the tire are calculated on the basis of the phase shift, the amplitude, and the amplitude change.

## Revendications

1. Dispositif ayant au moins deux capteurs, en particulier des capteurs de torsion de flanc de pneu (SWT), pour un système de réglage de véhicule automobile, qui sont agencés à une distance différente de l'axe de rotation du pneu de manière stationnaire sur le châssis ou sur la suspension de roue et qui coopèrent avec au moins un codeur agencé sur ou dans le flanc de pneu ou avec au moins un codeur agencé sur ou dans le flanc de pneu et un codeur traditionnel présentant des pôles, les signaux de sortie ou les informations de sortie des capteurs étant acheminés après une exploitation au système de réglage du véhicule, **caractérisé en ce qu'**entre le système de réglage du véhicule et les capteurs sont prévus au moins un organe analogique et un organe numérique de préparation (10, 11) et/ou de traitement de signal (12) numérique, **en ce que** dans l'organe de préparation analogique (10) les signaux de courant de sortie sinusoïdaux des capteurs S_{L}, S_{U} sont convertis en une tension et transformés en un signal rectangulaire, filtrés, ajustés à des modifications du décalage de signal des capteurs et la valeur de pic de chaque demi-onde est enregistrée et **en ce que**, dans l'organe de préparation de signal numérique (11), est réalisée une conversion des signaux analogiques en signaux numériques en matière d'amplitude, de période et de décalage temporel.

2. Dispositif selon la revendication 1, **caractérisé en ce que** les capteurs S_{L}, S_{U} mettent à disposition au moins deux signaux de sortie exploitables en matière de modification de la position de phase et au moins un signal de sortie exploitable en matière de modification d'amplitude, sous la forme de signaux de courant alternatif sensiblement sinusoïdaux, de l'organe de préparation et/ou de traitement de signal analogique (10).

3. Dispositif selon la revendication 1 ou 2, **caractérisé en ce que** l'on affecte au moins un convertisseur analogique/numérique (15, 16) à l'organe de préparation et/ou de traitement de signal analogique (10) pour déterminer l'amplitude.

4. Dispositif selon l'une quelconque des revendications 1 à 3, **caractérisé par** un organe de traitement de signal analogique (10) avec un convertisseur, qui convertit le signal de courant alternatif sinusoïdal en une tension, un filtre (25) qui atténue les parasites du signal, une unité de compensation de décalage (26, 12), qui ajuste l'organe de préparation et/ou de traitement de signal aux modifications du décalage de signal du capteur, un circuit de déclenchement (24, 32) qui convertit le signal (analogique) sinusoïdal en un signal rectangulaire et un organe de détermination d'amplitude (23, 33, 34, 35, 36) qui enregistre la valeur de pic de chaque demi-onde.

5. Dispositif selon l'une quelconque des revendications 1 à 4, **caractérisé par** un organe de détermination d'amplitude comprenant :
un ampli-séparateur (33) qui amplifie séparément la demi-onde positive et la demi-onde négative,
un invertisseur qui inverse la demi-onde négative,
un commutateur (34) déclenché par le signal produit à la sortie du circuit de déclenchement qui connecte, avec la phase correcte, la demi-onde positive ou la demi-onde négative à l'entrée d'un détecteur de valeur d'amplitude (35),
un registre (36) qui fixe la valeur de l'amplitude et
un circuit (44) contrôlé par l'organe de préparation et/ou dee traitement (11) de signal numérique pour effacer le registre (36).

6. Dispositif selon l'une quelconque des revendications 1 à 5, **caractérisé en ce que** l'organe de préparation de signal numérique (11) comprend au moins un système logique (17, 18, 19) avec au moins deux compteurs de période (27, 28, 29, 30), dans lequel des commandes de déroulement font démarrer ou stoppent les compteurs (27, 28, 29, 30), respectivement, lors des passages par zéro avec un flanc positif ou négatif des signaux du premier capteur S_{L} agencé plus près de l'axe de rotation et dans lequel, lors des passages par zéro des signaux du second capteur S_{U} plus éloigné de l'axe de rotation, l'indication du compteur actuelle à cet instant est enregistrée par un repère temporel dans des registres (46, 47).

7. Dispositif selon l'une quelconque des revendications 1 à 6, **caractérisé en ce qu'**au moins un registre (42, 43, 45, 46, 47) est affecté aux compteurs (27, 28, 29, 30) et **en ce que**, dans le registre (42, 43, 45, 46, 47), l'indication du compteur (27, 28, 29, 30) est stockée dans le registre à chaque passage par zéro et que celui-ci est ensuite redémarré.

8. Dispositif selon l'une quelconque des revendications 1 à 7, **caractérisé en ce que** le système logique (17, 18, 19) présente un organe de gestion d'interruption (INTERRUPT QUEUE HANDLING) qui fixe la séquence des données des compteurs à transmettre à l'organe de préparation de signal numérique (12) et qui envoie une demande d'interruption à l'organe de traitement de signal numérique (12).

9. Dispositif selon l'une quelconque des revendications 1 à 8, **caractérisé en ce qu'**il est prévu dans l'organe de préparation de signal (11) un registre (IDENT) (41) dans lequel des signaux d'état sont stockés, par exemple, pour identifier les pneus ou les roues des données de compteurs stockées dans les registres (42, 43, 45, 46, 47).

10. Dispositif selon l'une quelconque des revendications 1 à 9, **caractérisé en ce que** le registre (IDENT) (41) est lu par l'organe de traitement de signal numérique (12) à la demande d'interruption, après quoi les registres (42, 43, 45, 46, 47) sont lus avec les valeurs de temps et d'amplitude et, à partir de ces données, on détermine le décalage de phase et on exploite les décalages de phase et les amplitudes par comparaison avec des valeurs de référence.

11. Dispositif selon l'une quelconque des revendications 1 à 10, **caractérisé en ce que** l'on calcule à partir du décalage de phase, de l'amplitude et de la modification d'amplitude, les forces longitudinales et/ou transversales du pneu.
